# EUROPEAN PATENT APPLICATION

(11) **EP 3 588 227 A1**
(43) Date of publication of application: **01.01.2020**
(21) Application number: 17900370.2
(22) Date of filing: 27.11.2017
(51) Int. Cl.: G05D 1/02, G05D 1/00, G01C 21/36

(54) **DEVICE AND METHOD FOR ASSISTING DRIVING OF VEHICLES**

(30) Priority: 13.03.2017 KR 20170031354
(71) Applicant: Samsung Electronics Co., Ltd., Suwon-si, Gyeonggi-do 16677 (KR)
(72) Inventor: YOO, Jin-woo, Suwon-si, Gyeonggi-do 16677 (KR); PARK, Chang-soo, Suwon-si, Gyeonggi-do 16677 (KR); BAIK, A-ron, Suwon-si, Gyeonggi-do 16677 (KR); CHOI, Mid-eum, Suwon-si, Gyeonggi-do 16677 (KR); RYU, Je-woong, Suwon-si, Gyeonggi-do 16677 (KR); JANG, Min-sung, Suwon-si, Gyeonggi-do 16677 (KR); LEE, Jeong-eun, Suwon-si, Gyeonggi-do 16677 (KR)
(74) Representative: Gulde & Partner
(86) International application number: PCT/KR2017/013579
(87) International publication number: WO 2018/169164

(57) **Abstract**

An apparatus and a method for assisting traveling of a vehicle are provided. The apparatus includes: a sensing unit; a processor configured to generate a traveling route available to the vehicle by using information acquired through the sensing unit while the vehicle is traveling; and a memory storing information about the generated available traveling route.

## Description

### TECHNICAL FIELD

The present disclosure relates to an apparatus and a method of assisting traveling of a vehicle.

### BACKGROUND ART

Recently, along with the fusion of information communication technology and the vehicle industry, smartification of vehicles has been quickly progressing. According to such smartification, vehicles have evolved from simple mechanical equipment to smart cars, and particularly, autonomous driving has received attention as a core technology of a smart car.

To implement autonomous driving, it is necessary for a vehicle to independently travel without intervention of a passenger, and it is particularly necessary for the vehicle to autonomously determine an optimal route available to a destination.

### DESCRIPTION OF EMBODIMENTS

### TECHNICAL PROBLEM

Provided are an apparatus and a method for assisting traveling of a vehicle, thereby enabling a traveling route available to the vehicle to be generated and provided. Provided also is a computer-readable recording medium having recorded thereon a program for executing the method on a computer. Technical problems to be solved are not limited to the technical problems described above, and other technical problems may exist.

### SOLUTION TO PROBLEM

According to an aspect of the present disclosure, an apparatus for assisting traveling of a vehicle includes: a sensing unit; a processor configured to generate a traveling route available to the vehicle by using information acquired through the sensing unit while the vehicle is traveling; and a memory storing information about the generated available traveling route.

The processor may be further configured to generate the traveling route available to the vehicle so as to correspond to a route along which the vehicle travels, by using the acquired information.

The processor may be further configured to determine coordinates, corresponding to points included in a route, on a high definition map by using the acquired information and generate the available traveling route on the high definition map by using the coordinates.

The processor may be further configured to generate the traveling route available to the vehicle so as to correspond to a route along which an external vehicle near the vehicle travels, by using the acquired information.

The processor may be further configured to generate the traveling route available to the vehicle based on at least one of a route along which the vehicle travels, a lane shape around the vehicle, a road state around the vehicle, a traffic state around the vehicle, and a type of an external vehicle near the vehicle.

The processor may be further configured to determine a plurality of candidate traveling routes available to the vehicle based on the acquired information, determine a reliability score of each of the plurality of candidate available traveling routes, and generate, as the available traveling route, a candidate available traveling route having a reliability score that is a reference value or more among the plurality of candidate available traveling routes.

The processor may be further configured to determine a traveling route to a destination of the vehicle based on the available traveling route and control a traveling device for the vehicle such that the vehicle travels along the determined traveling route.

The memory may store information about the available traveling route as metadata of the high definition map.

The processor may be further configured to generate an available traveling route in a lane unit on the high definition map in response to traveling of the vehicle in a lane unit.

According to another aspect of the present disclosure, a method of assisting traveling of a vehicle includes: generating a traveling route available to the vehicle by using information acquired through a sensing unit while the vehicle is traveling; and storing information about the generated available traveling route.

According to another aspect of the present disclosure, a computer-readable recording medium includes a recording medium having recorded thereon a program for executing the method on a computer.

### BRIEF DESCRIPTION OF DRAWINGS

FIG. 1 is an example of operating an apparatus for assisting traveling of a vehicle.
FIG. 2 is a flowchart of a method, performed by an apparatus, of assisting traveling of a vehicle, according to an embodiment.
FIG. 3 is a flowchart of a method, performed by an apparatus, of generating a traveling route available to a vehicle, according to an embodiment.
FIG. 4 is an embodiment whereby an apparatus generates a traveling route available to a vehicle.
FIG. 5 is another embodiment whereby an apparatus generates a traveling route available to a vehicle.
FIG. 6 is another embodiment whereby an apparatus generates a traveling route available to a vehicle.
FIG. 7 is a flowchart of a method, performed by an apparatus, of generating an available traveling route based on candidate available traveling routes, according to an embodiment.
FIG. 8 is an embodiment whereby an apparatus determines reliability scores of candidate available traveling routes, according to an embodiment.
FIG. 9 is an embodiment whereby an apparatus updates reliability scores of candidate available traveling routes, according to an embodiment.
FIG. 10 is a flowchart of a method, performed by an apparatus, of determining a traveling route to a destination of a vehicle, based on an available traveling route, according to an embodiment.
FIG. 11 is an embodiment whereby an apparatus determines a traveling route to a destination of a vehicle based on an available traveling route, according to an embodiment.
FIG. 12 is a block diagram of an apparatus for assisting traveling of a vehicle, according to an embodiment.
FIG. 13 is a block diagram of an apparatus for assisting traveling of a vehicle, according to another embodiment.
FIG. 14 is a block diagram of a vehicle according to an embodiment.

### MODE OF DISCLOSURE

The terms used in embodiments are those general terms currently widely used in the art, but the terms may vary according to the intention of those of ordinary skill in the art, precedents, or new technology in the art. Also, specified terms may be selected by the applicant, and in this case, the detailed meaning thereof will be described in the detailed description. Thus, the terms used in the specification should be understood not as simple names but based on the meaning of the terms and the overall description

Throughout the specification, it will also be understood that when a component "includes" an element, unless there is another opposite description thereto, it should be understood that the component does not exclude another element but may further include another element. In addition, terms such as "... unit", "... module", and the like refer to units that perform at least one function or operation, and the units may be implemented as hardware or software or as a combination of hardware and software.

Hereinafter, embodiments of the present invention will be described in detail with reference to the accompanying drawings so that those of ordinary skill in the art may easily realize the present invention. However, the present invention may be embodied in many different forms and should not be construed as being limited to the embodiments set forth herein.

Hereinafter, embodiments of the present invention will be described in detail with reference to the accompanying drawings.

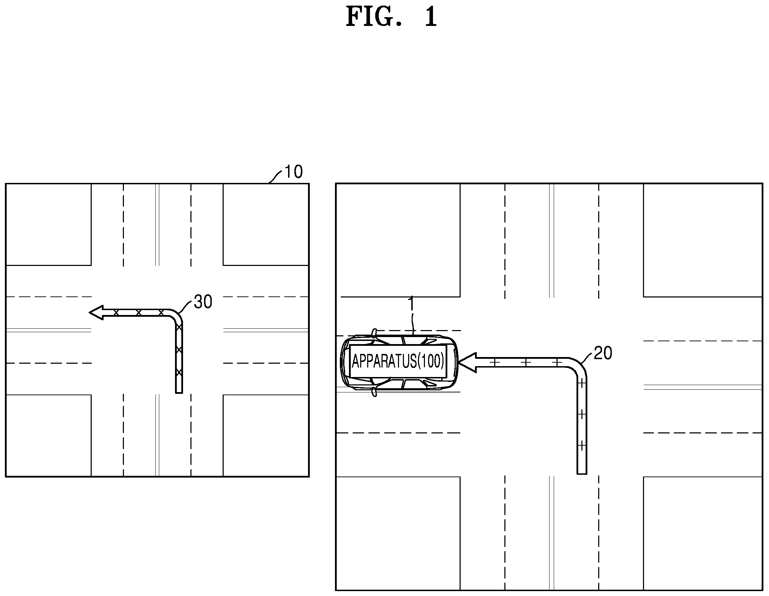

FIG. 1 is an example of operating an apparatus for assisting traveling of a vehicle.

A vehicle 1 may include an apparatus for assisting traveling of the vehicle 1 100 (hereinafter, the apparatus 100).

The apparatus 100 may generate a traveling route available to the vehicle 1 by using information acquired through a sensing unit while the vehicle 1 is traveling.

According to an embodiment, the apparatus 100 may generate the traveling route available to the vehicle 1 so as to correspond to a route along which the vehicle 1 travels, by using the information acquired through the sensing unit. In detail, according to traveling of the vehicle 1 along a route, the apparatus 100 may recognize the route along which the vehicle 1 travels, through position information of the vehicle 1, which has been acquired through the sensing unit, and generate an available traveling route on a high definition map based on the recognized route. The high definition map indicates a two-dimensional (2D) or three-dimensional (3D) map constructed at high accuracy with information about a road and the surrounding terrain thereof. For example, the high definition map may represent a road gradient, a curve curvature, a curved road difference of altitude, a lane width, or the like at an error range level of 10 to 20 cm. The available traveling route indicates a route along which the vehicle 1 may travel on the high definition map.

According to traveling of the vehicle 1 along a route, the apparatus 100 may determine coordinates on the high definition map, which correspond to points included in the route along which the vehicle 1 travels, based on position information of the vehicle 1 and generate an available traveling route on the high definition map by using the determined coordinates.

According to an embodiment, as shown in FIG. 1, the apparatus 100 may determine coordinates X on a high definition map 10, which correspond to points + included in a route 20 along which the vehicle 1 travels. In other words, the apparatus 100 may respectively determine coordinates X on the high definition map 10, which correspond to the points + included in the route 20 Thereafter, the apparatus 100 may generate an available traveling route 30 on the high definition map 10 by using the coordinates X on the high definition map 10. As an example, the apparatus 100 may generate, as the available traveling route 30, a set of the coordinates X on the high definition map 10. As another example, the apparatus 100 may generate, as the available traveling route 30, a route connecting the coordinates X on the high definition map 10. The number and the positions of the points and the coordinates in FIG. 1 are only an example and are thus not limited thereto.

The apparatus 100 may store information about a generated available traveling route. In addition, the apparatus 100 may cumulatively store information about an available traveling route on a high definition map every time the vehicle 1 travels

Therefore, the apparatus 100 may provide an available traveling route, such that, when a route of the vehicle 1 to a destination is searched for, a more appropriate route search may be possible. In other words, the apparatus 100 may determine a route to a destination among available traveling routes that ate routes along which the vehicle 1 may actually travel, thereby enabling a more appropriate route search to be performed In addition, the apparatus 100 may provide an available traveling route on a high definition map constructed at a high degree of precision, thereby enabling a more detailed available traveling route to be provided. For example, when the vehicle 1 travels along a route in a lane unit or a route in a more minute unit than the lane unit, the apparatus 100 may provide an available traveling route in the lane unit or a more detailed unit than the lane unit on the high definition map. In addition, even on a road without lanes, the apparatus 100 may provide an available traveling route on the high definition map. In addition, when the vehicle 1 performs autonomous driving, the vehicle 1 may search for a route to a destination by using an available traveling route on the high definition map provided from the apparatus 100 and perform autonomous driving along the retrieved route.

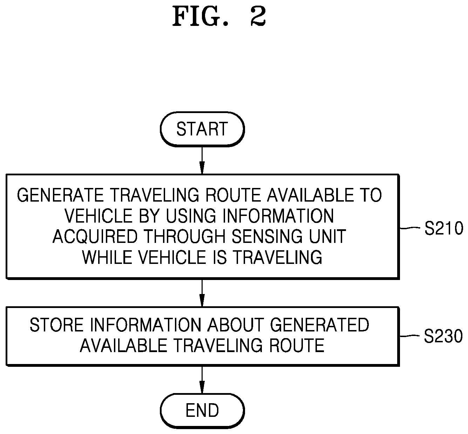

FIG. 2 is a flowchart of a method, performed by an apparatus, of assisting traveling of a vehicle, according to an embodiment.

In operation S210, the apparatus 100 may generate a traveling route available to the vehicle 1 by using information acquired through a sensing unit while the vehicle 1 is traveling. The information acquired through the sensing unit may include information about a position of the vehicle 1 and information about a traveling environment around the vehicle 1. In other words, the apparatus 100 may acquire information about a position of the vehicle 1, information about a position around the vehicle 1, and information about a traveling environment around the vehicle 1 through the sensing unit including a radio detection and ranging (RADAR) sensor, a light detection and ranging (LIDAR) sensor, a global positioning system (GPS), an inertial measurement unit (IMU), an image sensor, and the like.

The apparatus 100 may generate the traveling route available to the vehicle 1 so as to correspond to a route along which the vehicle 1 travels, by using position information of the vehicle 1, which has been acquired through the sensing unit.

The apparatus 100 may generate the traveling route available to the vehicle 1 by using information about a traveling environment around the vehicle 1, which has been acquired through the sensing unit. The information about the traveling environment around the vehicle 1 may include information about a position of an external vehicle near the vehicle 1, information about a lane shape around the vehicle 1, information about a road state around the vehicle 1, information about a traffic state around the vehicle 1, information about an accident black spot around the vehicle 1, information about a type of the external vehicle near the vehicle 1, and the like.

The apparatus 100 may generate the traveling route available to the vehicle 1 based on the information about the position of the external vehicle near the vehicle 1, which has been acquired through the sensing unit. In detail, the apparatus 100 may determine coordinates on a high definition map, which correspond to points included in a route along which the external vehicle near the vehicle 1 travels, and generate the available traveling route on the high definition map by using the determined coordinates.

The apparatus 100 may generate the traveling route available to the vehicle 1 based on the information about the lane shape around the vehicle 1, which has been acquired through the sensing unit. In detail, the apparatus 100 may generate the available traveling route on the high definition map based on the number of lanes and a lane interval around the vehicle 1. For example, the apparatus 100 may generate four available traveling routes on the high definition map when a four-lane straight road exists around the vehicle 1.

The apparatus 100 may determine whether to generate the traveling route available to the vehicle 1, based on the information about the traffic state around the vehicle 1, which has been acquired through the sensing unit. For example, the apparatus 100 may not generate the traveling route available to the vehicle 1 for a particular sector of a road around the vehicle 1 when the particular sector is in a traffic jam state.

The apparatus 100 may determine whether to generate the traveling route available to the vehicle 1, based on the information about the road state around the vehicle 1 through the sensing unit. For example, the apparatus 100 may not generate the available traveling route for a particular sector of a road around the vehicle 1 when the particular sector is an unpaved road.

In operation S220, the apparatus 100 may store information about the available traveling route generated in operation S210. According to an embodiment, the apparatus 100 may store the information about the available traveling route on the high definition map in association with the high definition map. In detail, the apparatus 100 may store the information about the available traveling route as metadata of data for the high definition map. The metadata indicates data for providing information directly or indirectly associated with data such as a video, a sound, a document, and the like.

In addition, according to an embodiment, the apparatus 100 may acquire information about an available traveling route from the outside through a communication unit. In addition, the apparatus 100 may transmit the pre-stored information about the available traveling route to the outside through the communication unit. For example, the apparatus 100 may share the information about the available traveling route with the outside in a cloud-based crowd sourcing form.

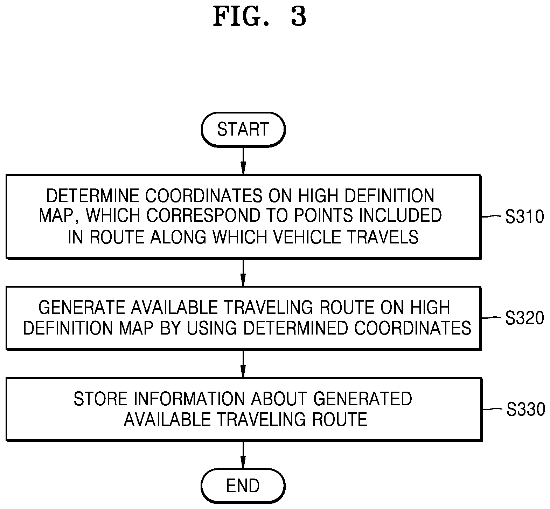

FIG. 3 is a flowchart of a method, performed by an apparatus, of generating a traveling route available to a vehicle, according to an embodiment.

In operation S310, the apparatus 100 may determine coordinates on a high definition map, which correspond to points included in a route along which the vehicle 1 travels.

First, the apparatus 100 may acquire the high definition map. As an example, the apparatus 100 may acquire the high definition map from an external server through a communication unit. As another example, the apparatus 100 may acquire a pre-stored high definition map from a memory.

Next, the apparatus 100 may determine preliminary coordinates of the vehicle 1 on the high definition map based on position information of the vehicle 1, which has been acquired through a sensing unit As an example, the apparatus 100 may determine preliminary coordinates of the vehicle 1 on the high definition map by using a GPS or an inertial navigation system (INS). Thereafter, the apparatus 100 may compare environment information around the vehicle 1, which has been acquired using a LIDAR sensor, and information about the high definition map and determine, as final coordinates of the vehicle 1, coordinates on the high definition map where the two pieces of information are best matched. As an example, the apparatus 100 may determine coordinates of the vehicle 1 on the high definition map based on a structure from motion (SFM) technique. Therefore, the apparatus 100 may more minutely determine coordinates of the vehicle 1 on the high definition map, that is, may determine coordinates of the vehicle 1 on the high definition map in a lane unit or a more minute unit than the lane unit.

Because the apparatus 100 may determine coordinates of the vehicle 1 on the high definition map, the apparatus 100 may determine coordinates on the high definition map, which correspond to points included in a route along which the vehicle 1 travels For example, the apparatus 100 may determine coordinates on the high definition map, which correspond to points through which the vehicle 1 travels, by determining coordinates of the vehicle 1 on the high definition map in every pre-set time period. According to an embodiment, the apparatus 100 may decrease the pre-set time period, and in this case, a more precise available traveling route may be generated.

In operation S320, the apparatus 100 may generate an available traveling route on the high definition map by using the coordinates determined in operation S310. According to an embodiment, the apparatus 100 may generate, as the available traveling route, a set of the pre-determined coordinates on the high definition map. According to another embodiment, the apparatus 100 may generate, as the available traveling route, a route connecting the pre-determined coordinates on the high definition map.

In operation S330, the apparatus 100 may store information about the available traveling route generated in operation S320. According to an embodiment, the apparatus 100 may store the information about the available traveling route on the high definition map in association with the high definition map. In detail, the apparatus 100 may store the information about the available traveling route as metadata of data for the high definition map. The metadata indicates data for providing information directly or indirectly associated with data such as a video, a sound, a document, and the like.

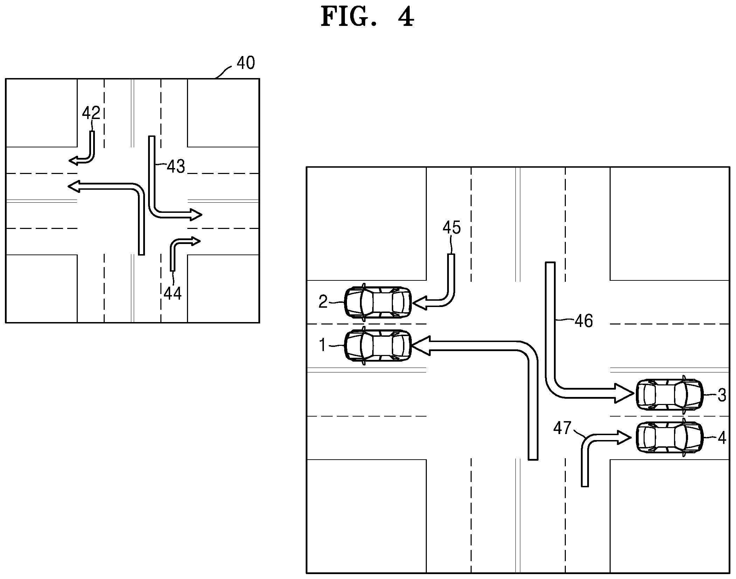

FIG. 4 is an embodiment whereby an apparatus generates a traveling route available to a vehicle.

The apparatus 100 may determine not only coordinates of the vehicle 1 on a high definition map 40 but also coordinates of external vehicles 2, 3, and 4 on the high definition map 40. According to an embodiment, the apparatus 100 may sense positions, speeds, and accelerations of the external vehicles 2, 3, and 4 by using a camera and a distance sensor, to acquire information about the positions, the speeds, and the accelerations of the external vehicles 2, 3, and 4. Therefore, the apparatus 100 may determine coordinates of the external vehicles 2, 3, and 4 on the high definition map 40 based on coordinates of the vehicle 1 on the high definition map 40 with reference to the information about the positions of the external vehicles 2, 3, and 4.

The apparatus 100 may determine coordinates of the external vehicles 2, 3, and 4 on the high definition map 40, and thus, the apparatus 100 may determine coordinates on the high definition map 40, which correspond to points included in routes 45, 46, and 47 along which the external vehicles 2, 3, and 4 travel.

Thereafter, the apparatus 100 may generate a plurality of available traveling routes 42, 43, and 44 on the high definition map 40 by using the coordinates of the external vehicles 2, 3, and 4 on the high definition map 40. In detail, the apparatus 100 may generate the available traveling route 42 on the high definition map 40, which corresponds to the route 45 along which the external vehicle 2 travels, generate the available traveling route 43 on the high definition map 40, which corresponds to the route 46 along which the external vehicle 3 travels, and generate the available traveling route 44 on the high definition map 40, which corresponds to the route 47 along which the external vehicle 4 travels.

Therefore, the apparatus 100 may generate a route along which the vehicle 1 travels and also generate an available traveling route for a route along which an external vehicle near the vehicle 1 travels, and thus, the apparatus 100 may generate a plurality of available traveling routes only with one-time traveling of the vehicle 1.

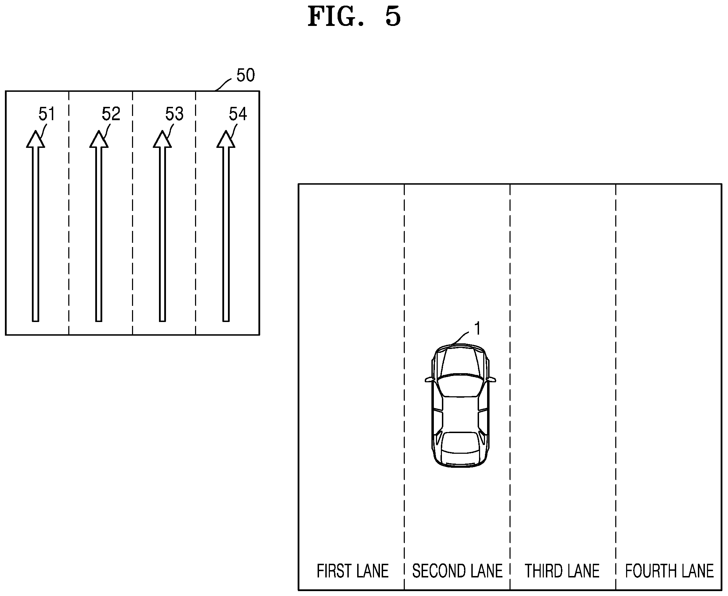

FIG. 5 is another embodiment whereby an apparatus generates a traveling route available to a vehicle.

The apparatus 100 may acquire information about a lane around the vehicle 1. For example, the apparatus 100 may acquire information about the number of lanes, a lane interval, and a lane shape around the vehicle 1. In addition, according to an embodiment, the apparatus 100 may acquire information about a lane around the vehicle 1 from a high definition map based on coordinates of the vehicle 1 on the high definition map. For example, the apparatus 100 may acquire information indicating that the lane around the vehicle 1 is a four-lane straight road, based on the coordinates of the vehicle 1 on the high definition map. In addition, according to another embodiment, the apparatus 100 may acquire information about a lane around the vehicle 1 by using an image sensor in the vehicle 1. For example, the apparatus 100 may acquire information indicating that the lane around the vehicle 1 is a three-lane straight road, each lane having a width of 2 meters, by using the image sensor in the vehicle 1.

The apparatus 100 may a traveling route available to the vehicle 1 based on pre-acquired information about a lane around the vehicle 1.

Referring to FIG. 5, the apparatus 100 may acquire information about a lane around the vehicle 1 and recognize that the vehicle 1 travels along a second lane of a four-lane straight road. Thereafter, the apparatus 100 may generate four available traveling routes 51, 52, 53, and 54 on a high definition map 50 based on each lane of the four-lane straight road. In detail, the apparatus 100 may generate the available traveling route 51 on the high definition map 50, which corresponds to a first lane, generate the available traveling route 52 on the high definition map 50, which corresponds to a second lane, generate the available traveling route 53 on the high definition map 50, which corresponds to a third lane, and generate the available traveling route 54 on the high definition map 50, which corresponds to a fourth lane.

Therefore, apparatus 100 may generate not only a route along which the vehicle 1 travels but also available traveling routes for lanes around the vehicle 1, and thus, the apparatus 100 may generate a plurality of available traveling routes only with one-time traveling of the vehicle 1.

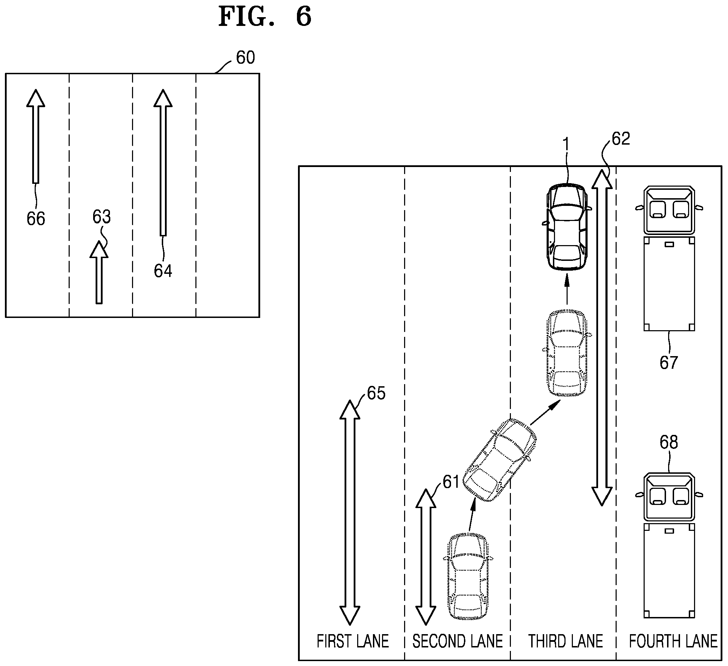

FIG. 6 is another embodiment whereby an apparatus generates a traveling route available to a vehicle.

The apparatus 100 may generate an available traveling route on a high definition map, which corresponds to a sector along which the vehicle 1 travels. For example with reference to FIG. 6, when the vehicle 1 travels along a sector 61 of a second lane and then travels along a sector 62 of a third lane, the apparatus 100 may generate an available traveling route 63 on a high definition map 60, which corresponds to the sector 61 of the second lane, and generate an available traveling route 64 on the high definition map 60, which corresponds to the sector 62 of the third lane.

The apparatus 100 may generate an available traveling route on a high definition map based on a traffic state around the vehicle 1. For example with reference to FIG. 6, the apparatus 100 may recognize a situation that external vehicles are congested in a sector 65 of a firs lane, by using a sensing unit in the vehicle 1. Thereafter, the apparatus 100 may generate an available traveling route 66 on the high definition map 60, which corresponds to a sector except for the sector 65 from a road ahead on the first lane because a traffic jam situation occurs in the sector 65 of the first lane.

The apparatus 100 may generate an available traveling route on a high definition map based on a road state around the vehicle 1. For example with reference to FIG. 6, the apparatus 100 may acquire information indicating that the sector 65 of the first lane is an unpaved road. Thereafter, the apparatus 100 may generate the available traveling route 66 on the high definition map 60, which corresponds to a sector except for the sector 65 from a road ahead on the first lane because the sector 65 of the first lane is an unpaved road.

The apparatus 100 may generate an available traveling route on a high definition map based on a type of an external vehicle near the vehicle 1. For example with reference to FIG. 6, the apparatus 100 may recognize that external vehicles 67 and 68 traveling on a fourth lane are trucks, through the sensing unit in the vehicle 1. Therefore, the apparatus 100 may determine that trucks frequently appear in a sector of the fourth lane and may not generate an available traveling route on the high definition map 60 for the fourth lane.

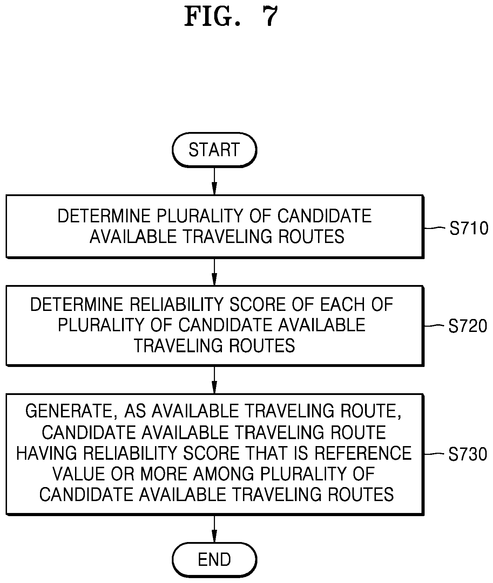

FIG. 7 is a flowchart of a method, performed by an apparatus, of generating an available traveling route based on candidate available traveling routes, according to an embodiment.

In operation S710, the apparatus 100 may determine a plurality of candidate available traveling routes for the vehicle 1. In other words, the apparatus 100 may determine, as the candidate available traveling routes, routes having the possibility of being an available traveling route. According to an embodiment, the apparatus 100 may determine a plurality of candidate available traveling routes based on a route along which the vehicle 1 travels or a traveling environment around the vehicle 1. For example, the apparatus 100 may determine a route on a high definition map, which corresponds to points through which the vehicle 1 travels, as a candidate available traveling route. In addition, the apparatus 100 may determine routes on the high definition map, which respectively correspond to lanes around the vehicle 1, as candidate available traveling routes.

In operation S720, the apparatus 100 may determine a reliability score of each of the plurality of candidate available traveling routes. In detail, the apparatus 100 may determine a reliability score according to a predetermined criterion for each of the plurality of candidate available traveling routes determined in operation S710. According to an embodiment, the apparatus 100 may determine a reliability score of a candidate available traveling route according to whether the candidate available traveling route is a lane along which the vehicle 1 travels or a lane along which an external vehicle near the vehicle 1 travels. For example, the apparatus 100 may assign a relatively higher reliability score to a candidate available traveling route corresponding to a route along which the vehicle 1 directly travels than a candidate available traveling route corresponding to a route along which an external vehicle travels. In addition, according to another embodiment, the apparatus 100 may determine a reliability score of a candidate available traveling route according to how adjacent to a lane along which the vehicle 1 travels the candidate available traveling route is. For example, the apparatus 100 may assign a relatively lower reliability score to a candidate available traveling route corresponding to a lane farther from the vehicle 1 than a candidate available traveling route corresponding to a lane closer to the vehicle 1. In addition, according to another embodiment, the apparatus 100 may determine a reliability score to a candidate available traveling route according to the number of vehicles traveling along the candidate available traveling route. For example, the apparatus 100 may determine a reliability score to a candidate available traveling route in proportion to the number of vehicles traveling along the candidate available traveling route.

In addition, the apparatus 100 may update a reliability score of each of the plurality of candidate available traveling routes According to an embodiment, the apparatus 100 may determine a reliability score of each of the plurality of candidate available traveling routes repetitively by a predetermined number of times: every time the vehicle 1 travels around the plurality of candidate available traveling routes, and may accumulate and update the determined reliability score.

In operation S730, the apparatus 100 may generate, as an available traveling route, a candidate available traveling route having a reliability score that is a reference value or more among the plurality of candidate available traveling routes.

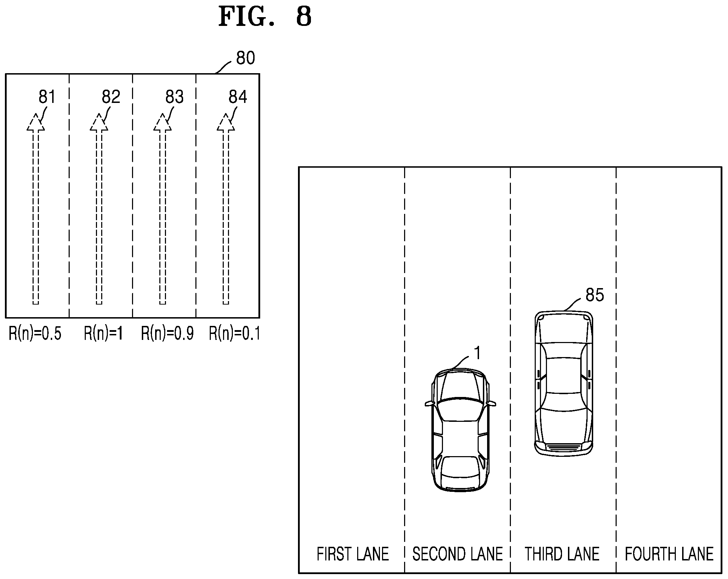

FIG. 8 is an embodiment whereby an apparatus determines reliability scores of candidate available traveling routes, according to an embodiment.

The apparatus 100 may determine a plurality of candidate available traveling routes on a high definition map based on information about a lane around the vehicle 1. Referring to FIG. 8, the apparatus 100 may determine a plurality of candidate available traveling routes 81, 82, 83, and 84 on a high definition map 80 based on information indicating that the lane around the vehicle 1 is a four-lane straight road. In detail, the apparatus 100 may determine the candidate available traveling route 81 corresponding to a first lane, determine the candidate available traveling route 82 corresponding to a second lane, determine the candidate available traveling route 83 corresponding to a third lane, and determine the candidate available traveling route 84 corresponding to a fourth lane.

Thereafter, the apparatus 100 may determine a reliability score R(n) of each of the plurality of candidate available traveling routes 81, 82, 83, and 84.

According to an embodiment, the apparatus 100 may assign '1' as a reliability score to the candidate available traveling route 81 because the candidate available traveling route 81 corresponds to a route along which the vehicle 1 directly travels. In addition, the apparatus 100 may assign '0.5' as a reliability score to the candidate available traveling route 82 because the candidate available traveling route 82 is a route corresponding to an adjacent lane of a lane along which the vehicle 1 travels. In addition, the apparatus 100 may assign '0.5' as a reliability score to the candidate available traveling route 83 because the candidate available traveling route 83 is a route corresponding to an adjacent lane of the lane along which the vehicle 1 travels, and additionally assign '0.4' as the reliability score to the candidate available traveling route 83 because the candidate available traveling route 83 corresponds to a route along which an external vehicle 85 travels. In addition, the apparatus 100 may assign '0.1' as a reliability score to the candidate available traveling route 84 because the candidate available traveling route 84 is a route corresponding to a lane spaced apart by two lanes from the lane along which the vehicle 1 travels. Therefore, the apparatus 100 may determine, as '0.5', the reliability score R(n) of the candidate available traveling route 81, determine, as '1', the reliability score R(n) of the candidate available traveling route 82, determine, as '0.9', the reliability score R(n) of the candidate available traveling route 83, and determine, as '0.1', the reliability score R(n) of the candidate available traveling route 84.

Therefore, the apparatus 100 may generate, as an available traveling route, the candidate available traveling route 82 having a reliability score that is a reference value '1' or more among the candidate available traveling routes 81, 82, 83, and 84.

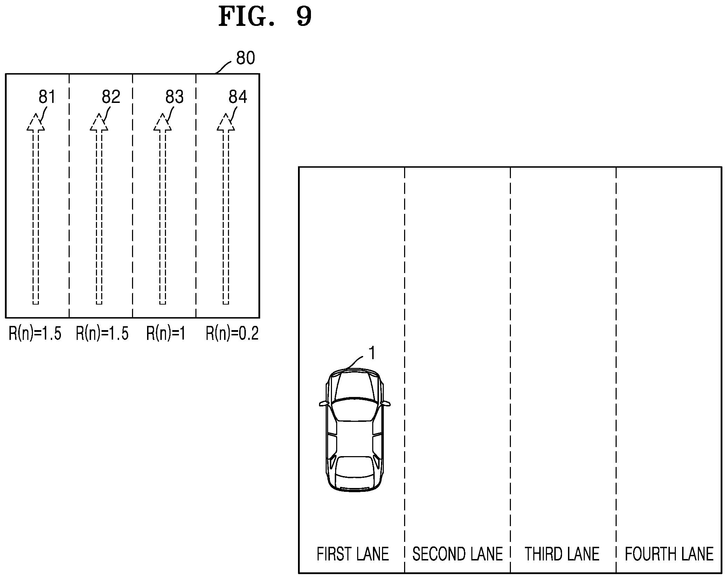

FIG. 9 is an embodiment whereby an apparatus updates reliability scores of candidate available traveling routes, according to an embodiment.

The apparatus 100 may update the reliability scores of the plurality of candidate available traveling routes 81, 82, 83, and 84 on the high definition map 80, respectively.

When the vehicle 1 travels along a four-lane straight road as shown in FIG. 8 and then travels along the same four-lane straight road again as shown in FIG. 9, the apparatus 100 may respectively update the reliability scores of the plurality of candidate available traveling routes 81, 82, 83, and 84, which have been determined in the first traveling. When the vehicle 1 travels on the road along the first lane in the second traveling, the apparatus 100 may assign '1' as a reliability score to the candidate available traveling route 81 and, as a result, update the determined reliability score of '0.5' to a reliability score of '1.5'. In addition, when the vehicle 1 travels on the road along the first lane, the apparatus 100 may assign '0.5' as a reliability score to the candidate available traveling route 82 and, as a result, update the determined reliability score of '1' to a reliability score of '1.5'. In addition, when the vehicle 1 travels on the road along the first lane, the apparatus 100 may assign '0.1' as a reliability score to the candidate available traveling route 83 and, as a result, update the determined reliability score of '0.9' to a reliability score of '1'. In addition, when the vehicle 1 travels on the road along the first lane, the apparatus 100 may assign '0.1' as a reliability score to the candidate available traveling route 84 and, as a result, update the determined reliability score of '0.1' to a reliability score of '0.2'.

Therefore, the apparatus 100 may generate an available traveling route among the plurality of candidate available traveling routes based on the updated reliability scores. For example, the apparatus 100 may generate, as available traveling routes, the candidate available traveling route 81, 82, and 83 having a reliability score that is the reference value '1' or more among the candidate available traveling routes 81, 82, 83, and 84.

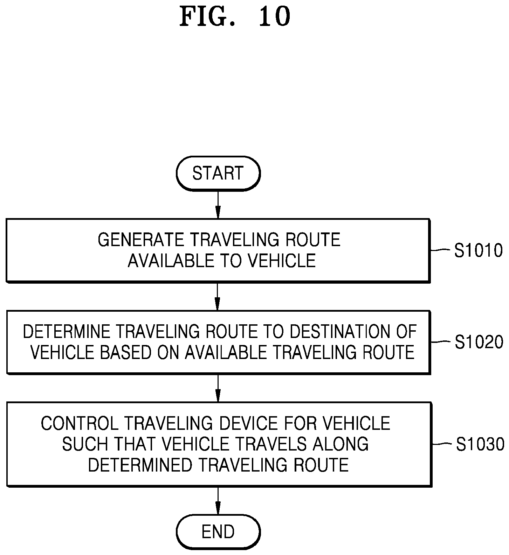

FIG. 10 is a flowchart of a method, performed by an apparatus, of determining a traveling route to a destination of a vehicle based on an available traveling route, according to an embodiment.

In operation S1010, the apparatus 100 may generate an available traveling route for the vehicle 1. According to an embodiment, the apparatus 100 may generate a plurality of available traveling routes on a high definition map based on a route along which the vehicle 1 travels or a traveling environment around the vehicle 1. In addition, the apparatus 100 may store information about pre-generated available traveling routes.

In operation S1020, the apparatus 100 may determine a traveling route to a destination of the vehicle 1 based on the available traveling route generated or stored in operation S1010. In detail, the apparatus 100 may select at least one available traveling route needed for the vehicle 1 to travel to the destination from among available traveling routes and determine the selected at least one available traveling route as a traveling route.

In operation S1030, the apparatus 100 may control the vehicle 1 such that the vehicle 1 travels along the traveling route determined in operation S1020. In detail, the apparatus 100 may control a traveling device for the vehicle 1 such that the vehicle 1 travels along a pre-determined traveling route. Therefore, the vehicle 1 may perform autonomous driving along the traveling route under control of the apparatus 100.

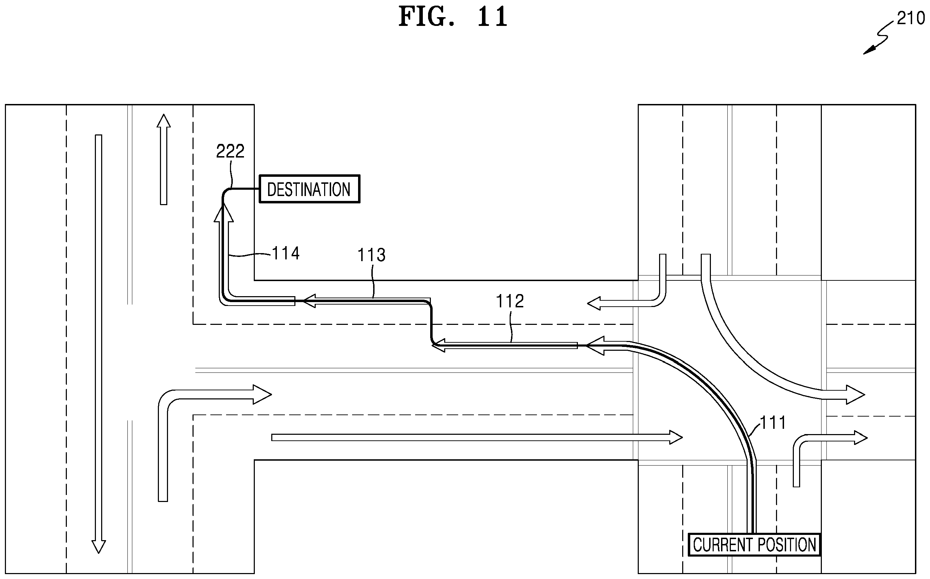

FIG. 11 is an embodiment whereby an apparatus determines a traveling route to a destination of a vehicle based on an available traveling route, according to an embodiment.

When the vehicle 1 travels from a current position to a destination, the apparatus 100 may determine a traveling route to the destination of the vehicle 1 based on a pre-generated available traveling route. According to an embodiment, the apparatus 100 may acquire information about the destination from an input unit in the vehicle 1 and determine a traveling route to the destination from a current position of the vehicle 1 based on the available traveling route.

The apparatus 100 may select available traveling routes 111, 112, 113, and 114 that are needed for the vehicle 1 to travel to the destination, from among a plurality of available traveling routes on a high definition map 210. Thereafter, the apparatus 100 may determine a traveling route 220 for the vehicle 1 by connecting the selected available traveling routes 111, 112, 113, and 114. Thereafter, the apparatus 100 may control the vehicle 1 such that the vehicle 1 travels along the determined traveling route 220. Therefore, the vehicle 1 may perform autonomous driving along the traveling route 220 under control of the apparatus 100.

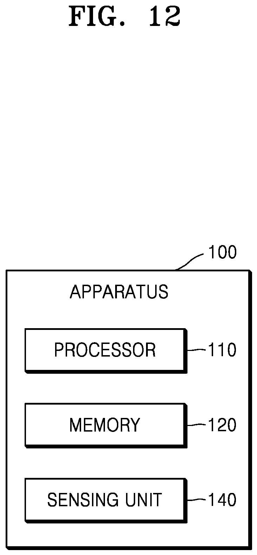

FIG. 12 is a block diagram of an apparatus for assisting traveling of a vehicle, according to an embodiment.

According to an embodiment, the apparatus 100 may include a sensing unit 140, a processor 110, and a memory 120. The apparatus 100 shown in FIG. 12 includes only components related to the present embodiment. Therefore, it could be understood by those of ordinary skill in the art to which the present embodiment belongs that general-use components other than the components shown in FIG. 12 may be further included.

The sensing unit 140 may acquire information about an environment where the vehicle 1 is located. According to an embodiment, the sensing unit 140 may acquire information about a position of the vehicle 1 and information about a traveling environment around the vehicle 1.

The processor 110 may generate a traveling route available to the vehicle 1 by using the information acquired through the sensing unit 140.

The processor 110 may generate the traveling route available to the vehicle 1 so as to correspond to a route along which the vehicle 1 travels, by using position information of the vehicle 1, which has been acquired through the sensing unit 140. In detail, the processor 110 may determine coordinates on a high definition map, which correspond to points included in the route along which the vehicle 1 travels. First, the processor 110 may acquire the high definition map. Next, the processor 110 may determine, as a position of the vehicle 1, coordinates of the vehicle 1 on the high definition map. According to an embodiment, the processor 110 may determine coordinates of the vehicle 1 on the high definition map by using information about the high definition map and sensors in the vehicle 1. Because the processor 110 may determine coordinates of the vehicle 1 on the high definition map, the processor 110 may determine coordinates on the high definition map, which correspond to points included in the route along which the vehicle 1 travels. Next, the processor 110 may generate an available traveling route on the high definition map by using the pre-determined coordinates. According to an embodiment, the processor 110 may generate, as the available traveling route, a set of the pre-determined coordinates on the high definition map. According to another embodiment, the processor 110 may generate, as the available traveling route, a route connecting the pre-determined coordinates on the high definition map.

Alternatively, the processor 110 may generate the available traveling route for the vehicle 1 based on a traveling environment around the vehicle 1. Alternatively, the processor 110 may generate the available traveling route for the vehicle 1 based on a route along which the vehicle 1 travels and a traveling environment around the vehicle 1.

In detail, the processor 110 may generate the available traveling route on the high definition map based on a route along which an external vehicle near the vehicle 1 travels. Alternatively, the processor 110 may generate the available traveling route on the high definition map based on a lane shape around the vehicle 1. Alternatively, the processor 110 may generate the available traveling route on the high definition map based on a traffic state around the vehicle 1. Alternatively, the processor 110 may generate the available traveling route on the high definition map based on a road state around the vehicle 1.

In addition, the processor 110 may determine a plurality of candidate available traveling routes for the vehicle 1. According to an embodiment, the processor 110 may determine the plurality of candidate available traveling routes for the vehicle 1 based on a route along which the vehicle 1 travels or a traveling environment around the vehicle 1.

Thereafter, the processor 110 may determine a reliability score of each of the plurality of candidate available traveling routes. In detail, the processor 110 may determine a reliability score according to a predetermined criterion for each of the plurality of candidate available traveling routes previously determined. In addition, the processor 110 may update the reliability score of each of the plurality of candidate available traveling routes.

Thereafter, the processor 110 may generate, as an available traveling route, a candidate available traveling route having a reliability score that is a reference value or more among the plurality of candidate available traveling routes.

The memory 120 may store information about the available traveling route generated by the processor 110.

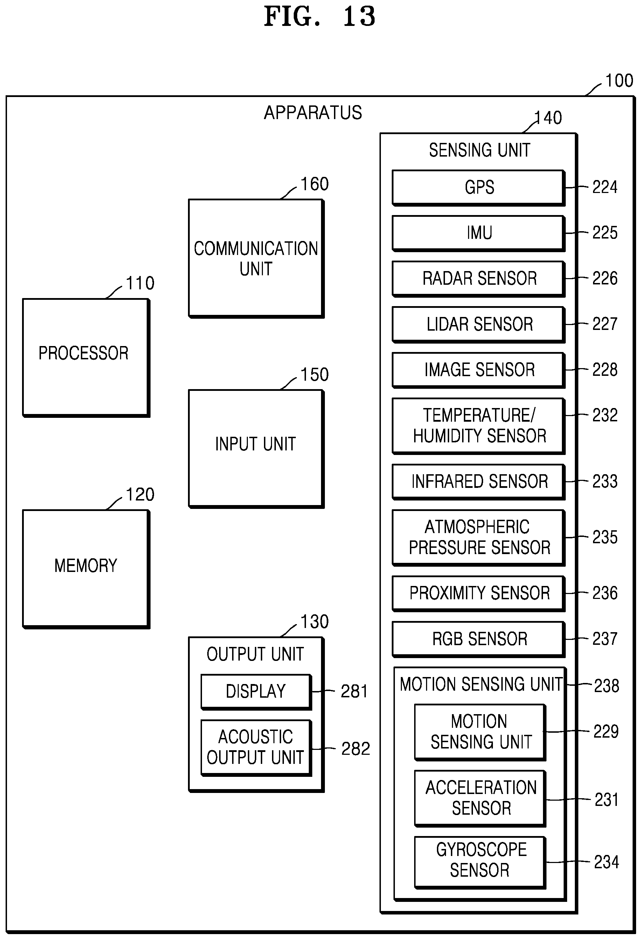

FIG. 13 is a block diagram of an apparatus for assisting traveling of a vehicle, according to another embodiment.

The apparatus 100 may include the sensing unit 140, the processor 110, an output unit 130, the memory 120, an input unit 150, and a communication unit 160.

The sensing unit 140 may include a plurality of sensors configured to detect information regarding an environment where the vehicle 1 is located and include one or more actuators configured to correct positions and/or orientations of the sensors. For example, the sensing unit 140 may include a GPS 224, an IMU 225, a RADAR sensor 226, a LIDAR sensor 227, and an image sensor 228. According to an embodiment, the image sensor 228 may include a camera, a stereo camera, a mono camera, a wide angle camera, or a 3D vision sensor. In addition, the sensing unit 140 may include at least one of a temperature/humidity sensor 232, an infrared sensor 233, an atmospheric pressure sensor 235, a proximity sensor 236, and an RGB (illuminance) sensor 237 but is not limited thereto. In addition, the sensing unit 140 may be configured to be in a complex form of the image sensor 228 and the RADAR sensor 226 or a complex form of the image sensor 228 and the LIDAR sensor 227. A function of each sensor may be intuitively inferred by those of ordinary skill in the art from a name thereof, and thus a detailed description thereof is omitted herein.

In addition, the sensing unit 140 may include a motion sensing unit 238 capable of sensing a motion of the vehicle 1. The motion sensing unit 238 may include a magnetic sensor 229, the acceleration sensor 231, and a gyroscope sensor 234.

The GPS 224 may be configured to estimate a geographical position of the vehicle 1. That is, the GPS 224 may include a transceiver configured to estimate a position of the vehicle 1 on the Earth.

The IMU 225 may be a set of sensors configured to detect changes in a position and an orientation of the vehicle 1 based on an inertial acceleration. For example, the set of sensors may include accelerometers and gyroscopes.

The RADAR sensor 226 may be configured to detect objects in an environment where the vehicle 1 is located, by using a radio signal. In addition, the RADAR sensor 226 may be configured to detect speeds and/or directions of the objects.

The LIDAR sensor 227 may be configured to detect objects in an environment where the vehicle 1 is located, by using a laser. More particularly, the LIDAR sensor 227 may include a laser light source and/or a laser scanner configured to emit a laser beam and a detector configured to detect reflection of the laser beam. The LIDAR sensor 227 may be configured to operate in a coherent (e.g., using heterodyne detection) or incoherent detection mode.

The image sensor 228 may be a still camera or a video camera configured to record an environment outside the vehicle 1. For example, the image sensor 228 may include a plurality of cameras, and the plurality of cameras may be arranged at a plurality of positions inside and outside the vehicle 1.

The memory 120 may include a magnetic disc drive, an optical disc drive, and a flash memory. Alternatively, the memory 120 may be a portable universal serial bus (USB) data storage device. The memory 120 may store system software for executing examples related to the present application. The system software for executing examples related to the present application may be stored in a portable storage medium.

The communication unit 160 may include at least one antenna for communicating with another device in a wireless manner. For example, the communication unit 160 may be used to communicate with a cellular network or another wireless protocol and system in a wireless manner through Wi-Fi or Bluetooth. The communication unit 160 controlled by the processor 110 may transmit and receive a wireless signal. For example, the processor 110 may execute a program stored in the memory 120, such that the communication unit 160 transmits and receives a wireless signal to and from a cellular network.

According to an embodiment, the communication unit 160 may acquire an available traveling route from the outside and also transmit, to the outside, information about an available traveling route pre-stored in the memory 120.

The input unit 150 indicates a means for inputting data for controlling the vehicle 1. For example, the input unit 150 may include a key pad, a dome switch, a touch pad (a capacitive overlay touch pad, a resistive overlay touch pad, an infrared (IR) beam touch pad, a surface acoustic wave touch pad, an integral strain gauge touch pad, a piezoelectric touch pad, or the like), a jog wheel, a jog switch, and the like but is not limited thereto. In addition, the input unit 150 may include a microphone, wherein the microphone may be configured to receive audio (e.g., a voice command) from a passenger of the vehicle 1.

The output unit 130 may output an audio signal or a video signal, and an output device 280 (the output unit 130) may include a display 281, an acoustic output unit 282, and a vibration unit 283.

The display 281 may include at least one of a liquid crystal display, a thin film transistor-liquid crystal display, an organic light-emitting diode, a flexible display, a 3D display, and an electrophoretic display. According to an implementation form of the output unit 130, the output unit 130 may include two or more displays 281.

The acoustic output unit 282 outputs audio data received from the communication unit 160 or stored in the memory 120. In addition, the acoustic output unit 282 may include a speaker, a buzzer, and the like.

The vibration unit 283 may generate physical vibrations by using electrical energy.

The input unit 150 and the output unit 130 may include a network interface and may be implemented by a touch screen.

The processor 110 may generally control the sensing unit 140, the communication unit 160, the input unit 150, the memory 120, and the output unit 130 by executing programs stored in the memory 120.

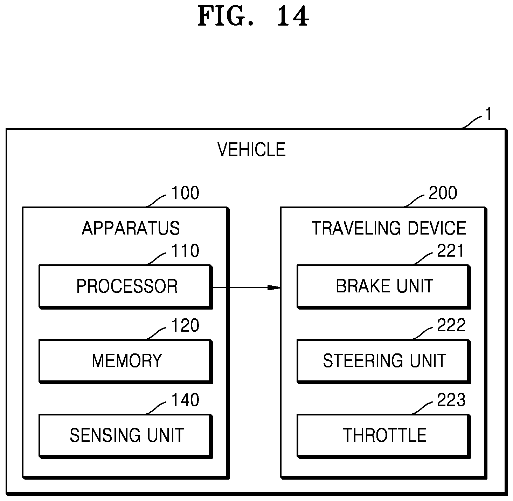

FIG. 14 is a block diagram of a vehicle according to an embodiment.

According to an embodiment, the vehicle 1 may include the apparatus 100 and a traveling device 200. The vehicle 1 shown in FIG. 14 includes only components related to the present embodiment. Therefore, it could be understood by those of ordinary skill in the art to which the present embodiment belongs that general-use components other than the components shown in FIG. 14 may be further included.

The apparatus 100 may include the sensing unit 140, the processor 110, and the memory 120.

The traveling device 200 may include a brake unit 221, a steering unit 222, and a throttle 223.

The steering unit 222 may be a set of mechanisms configured to adjust a direction of the vehicle 1.

The throttle 223 may be a set of mechanisms configured to control a speed of the vehicle 1 by controlling an operating speed of an engine/motor 211. In addition, the throttle 223 may adjust a throttle open rate to adjust a mixed gas volume of fuel air flowing in the engine/motor 211 and may adjust a throttle open rate to adjust motive power and thrust.

The brake unit 221 may be a set of mechanisms configured to decelerate the vehicle 1. For example, the brake unit 221 may use friction to reduce a speed of a wheel/tire 214.

The processor 110 may determine a traveling route to a destination based on a pre-generated or stored available traveling route. In detail, the processor 110 may select at least one available traveling route needed for the vehicle 1 to travel to the destination from among available traveling routes and determine the selected at least one available traveling route as a traveling route.

Thereafter, the processor 110 may control the vehicle 1 such that the vehicle 1 travels along a pre-determined traveling route. In detail, the processor 110 may control the traveling device for the vehicle 1 such that the vehicle 1 travels along the pre-determined traveling route. Therefore, the vehicle 1 may perform autonomous driving along the traveling route under control of the apparatus 100.

An apparatus according to the present embodiments described above may include a processor, a memory for storing and executing program data, a permanent storage such as a disc drive, a communication port for communicating with an external device, a user interface device such as a touch panel, a key, a button, and the like, and the like. Methods implemented by a software module or algorithm may be stored in a computer-readable recording medium as computer-readable code or program commands executable in the processor. Herein, examples of the computer-readable recording medium include magnetic storage media (e.g., read-only memory (ROM), random-access memory (RAM), floppy disks, hard disks, etc.) and optical recording media (e.g., CD-ROMs, or digital versatile discs (DVDs)), and the like. The computer-readable recording medium can also be distributed over network-coupled computer systems so that the computer-readable code is stored and executed in a distributed fashion. The medium is readable by a computer, is stored in a memory, and can be executed by a processor.

The present embodiments can be represented with functional blocks and various processing steps. These functional blocks can be implemented by various numbers of hardware and/or software configurations for executing specific functions. For example, the embodiments may adopt direct circuit configurations, such as memory, processing, logic, and look-up table, for executing various functions under control of one or more processors or by other control devices. Like components of the present embodiments being able to execute the various functions with software programming or software elements, the present embodiments can be implemented by a programming or scripting language, such as C, C++, Java, or assembler, with various algorithms implemented by a combination of a data structure, processes, routines, and/or other programming components. Functional aspects can be implemented with algorithms executed in one or more processors. In addition, the present embodiments may adopt the prior art for electronic environment setup, signal processing and/or data processing. The terms, such as "mechanism", "element", "means", and "configuration", can be widely used and are not delimited as mechanical and physical configurations. The terms may include the meaning of a series of routines of software in association with a processor.

## Claims

1. An apparatus for assisting traveling of a vehicle,
the apparatus comprising:
a sensing unit;
a processor configured to generate a traveling route available to the vehicle by using information acquired through the sensing unit while the vehicle is traveling; and
a memory storing information about the generated available traveling route.

2. The apparatus of claim 1, wherein
the processor is further configured to
generate the traveling route available to the vehicle so as to correspond to a route along which the vehicle travels, by using the acquired information.

3. The apparatus of claim 2, wherein
the processor is further configured to
determine coordinates, corresponding to points included in the route, on a high definition map by using the acquired information and generate the available traveling route on the high definition map by using the coordinates.

4. The apparatus of claim 1, wherein
the processor is further configured to
generate the traveling route available to the vehicle so as to correspond to a route, along which an external vehicle near the vehicle travels, by using the acquired information.

5. The apparatus of claim 1, wherein
the processor is further configured to
generate the traveling route available to the vehicle based on at least one of a route along which the vehicle travels, a route along which an external vehicle near the vehicle travels, a lane shape around the vehicle, a road state around the vehicle, a traffic state around the vehicle, and a type of the external vehicle near the vehicle.

6. The apparatus of claim 1, wherein
the processor is further configured to
determine a plurality of candidate traveling routes available to the vehicle based on the acquired information,
determine a reliability score of each of the plurality of candidate available traveling routes, and
generate, as the available traveling route, a candidate available traveling route having a reliability score that is a reference value or more among the plurality of candidate available traveling routes.

7. The apparatus of claim 1, wherein
the processor is further configured to
determine a traveling route to a destination of the vehicle based on the available traveling route and
control a traveling device for the vehicle such that the vehicle travels along the determined traveling route.

8. The apparatus of claim 1, wherein
the memory
stores information about the available traveling route as metadata of the high definition map.

9. The apparatus of claim 1, wherein
the processor is further configured to
generate an available traveling route in a lane unit on the high definition map in response to traveling of the vehicle in the lane unit.

10. A method of assisting traveling of a vehicle
the method comprising:
generating a traveling route available to the vehicle by using information acquired through a sensing unit while the vehicle is traveling; and
storing information about the generated available traveling route.

11. The method of claim 10, wherein
the generating comprises
generating the traveling route available to the vehicle so as to correspond to a route along which the vehicle travels, by using the acquired information.

12. The method of claim 11, wherein
the generating comprises
determining coordinates, corresponding to points included in the route, on a high definition map by using the acquired information and generating the available traveling route on the high definition map by using the coordinates.

13. The method of claim 10, wherein
the generating comprises
generating the traveling route available to the vehicle so as to correspond to a route along which an external vehicle near the vehicle travels, by using the acquired information.

14. The method of claim 10, wherein
the generating comprises
generating the traveling route available to the vehicle based on at least one of a route along which the vehicle travels, a route along which an external vehicle near the vehicle travels, a lane shape around the vehicle, a road state around the vehicle, a traffic state around the vehicle, and a type of the external vehicle near the vehicle.

15. A computer-readable recording medium
having recorded thereon a program for executing, on a computer, the method in claim 10.
